# EUROPEAN PATENT APPLICATION

(11) **EP 1 702 739 A1**
(43) Date of publication of application: **20.09.2006**
(21) Application number: 06388018.1
(22) Date of filing: 17.03.2006
(51) Int. Cl.: B29C 45/14, B65D 43/02

(54) **A method of applying colour or print onto a plastics container and a container with colour in the skirt**

(30) Priority: 18.03.2005 DK 200500393
(71) Applicant: Superfos A/S, 4390 Vipperod (DK)
(72) Inventor: Nielsen, Birthe Bebe, 8900 Randers (DK); Winther, Hans-Jorgen, 8000 Arhus C (DK)
(74) Representative: Sundien, Thomas

(57) **Abstract**

A method of moulding plastics containers (10) having colour or print on a projecting skirt (2), said method comprising that a coloured or printed element is inserted into a mould for plastics containers with skirt, in such a manner that this element is moulded integrally with the skirt (2) of the plastics container (10) in the moulding procedure.

## Description

The invention relates to a method of applying colour or print onto essentially the same place on a number of plastics containers.

Such methods usually comprise holding the plastics container in such a manner that it is able to rotate about its axis of symmetry during the printing; and a colour transfer cloth rotating about an axis and being in contact with the round-going sidewall of the container during rotation of the container for application of colour onto the container. Moreover known methods comprise a number of clichés that are caused to rotate in such a manner that they touch the colour transfer cloth for application of colour there onto in accordance with how it is wished to apply the colour onto the container itself.

However, this is technically complex and hence also cost intensive.

By this method it is also difficult to apply an even and accurate pressure onto the skirt of a plastics container, and therefore, today, colour or print is not applied to the skirt.

By the method according to the invention as defined in claim 1 a simple way of depositing colour onto the skirt of a plastics container is enabled.

More specifically, it is accomplished in that the method comprises the steps featured in claim 1.

The invention also relates to a plastics container with colour in the skirt as featured in claim 4.

Preferred embodiments will appear from the dependent claims.

In the following the invention will be explained in further detail with reference to a currently preferred embodiment.

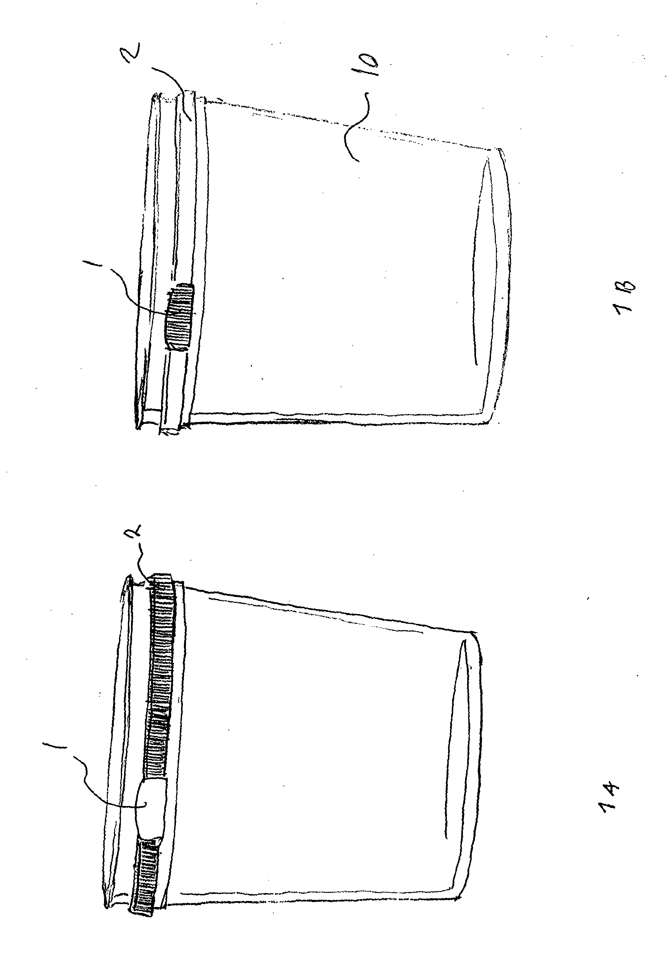

Figure 1 A is a perspective view of a plastics container with a projecting skirt, wherein the skirt is coloured.
Figure 1 B is a perspective view of a plastics container with a projecting skirt, wherein a rupture part is coloured.

Figure 1 A shows a plastics container 10 according to the invention comprising a coloured skirt 2 encircling the upper part of the container 10, and on the coloured skirt 2 a small flap 1 is arranged (which may, of course just as well be another known opening mechanism).

Figure 1 B shows a known plastics container 10 comprising a non-coloured skirt 2 encircling the upper part of the skirt, and on the container a small coloured flap 1 is arranged (which may, of course just as well be another known opening mechanism). Such plastics containers with coloured lifting part are known eg from European patent application No. EP 1 483 163.

Plastics packagings for foodstuffs are often configured with a part that serves, on the one hand, to facilitate opening of the container and, on the other, to prevent a container from being opened and closed again without leaving permanent traces. Typically such (tamper) part consists of a rupture mechanism in the form of a (relatively) small flap that is to be torn off or depressed before the lid on the container can be removed; however, other embodiments are also known. Typically, it applies to the vast majority of the rupture mechanisms that they are comparatively small and it is consequently also a comparatively small area that is to be identified by the end user prior to opening the container. At the end user's, this often gives rise to problems and therefore it is attempted today to make such (tamper) faces visible by applying colour or tactile surfaces in various ways. Typically the application procedure takes place during the container moulding process as such, or else colour is applied in a separate colour application process, where the individual finished containers are first oriented correctly and colour is subsequently applied onto relevant parts.

Neither of said methods, however, is accurate enough for colour or print to be applied onto the skirt 2 as such of a plastics container, and therefore such containers are indeed not known.

By the invention it has been realized that such application of colour or print may take place in a simple manner and sufficiently accurately in that a coloured or printed element is inserted into a mould for plastics containers with skirt, whereby this element is moulded integrally into the skirts of the containers moulded in the mould (so-called in-mould labelling). The print (the motif) as such may advantageously be commercials, indication of sell-by date or the like. However, it may also be a tactile coating with information for eg blind or visually impaired individuals.

## Claims

1. A method of moulding plastics containers having colour or print on a projecting skirt (2), said method comprising that a coloured or printed element is inserted into a mould for plastics containers (10) with skirt (2), in such a manner that this element is moulded integrally with the skirt of the plastics container in the moulding procedure.

2. A method according to claim 1, wherein the method comprises moulding of a round plastics container.

3. A method according to claims 1 or 2, wherein the method comprises inclusion of a tactile coating.

4. A plastics container with sides and projecting skirt (2), said plastics container comprising a coloured or printed element in the skirt of the plastics container.
